(19) Europäisches Patentamt
European Patent Office
Office européen des brevets

(11) EP 2 525 324 B1

(12) EUROPEAN PATENT SPECIFICATION

(45) Date of publication and mention of the grant of the patent:
**26.08.2015 Bulletin 2015/35**

(51) Int Cl.:
*G06T 7/20* (2006.01)

(21) Application number: **12164975.0**

(22) Date of filing: **20.04.2012**

(54) **Method and apparatus for generating a depth map and 3d video**

Verfahren und Vorrichtung zur Erzeugung einer Tiefenkarte und eines 3D-Videos

Procédé et appareil pour générer une carte de profondeurs et vidéo en 3D

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **20.05.2011 TR 201104918**

(43) Date of publication of application:
**21.11.2012 Bulletin 2012/47**

(73) Proprietor: **Vestel Elektronik Sanayi ve Ticaret A.S. 45030 Manisa (TR)**

(72) Inventors:
• **Bastug, Ahmet**
  **45030 Manisa (TR)**
• **Ozdemir, Huseyin**
  **45030 Manisa (TR)**
• **Ozer, Nuri**
  **45030 Manisa (TR)**

(74) Representative: **Beck Greener**
  **Fulwood House**
  **12 Fulwood Place**
  **London WC1V 6HR (GB)**

(56) References cited:
• **THOMAS MEIER ET AL: "Automatic Segmentation of Moving Objects for Video Object Plane Generation", IEEE TRANSACTIONS ON CIRCUITS AND SYSTEMS FOR VIDEO TECHNOLOGY, IEEE SERVICE CENTER, PISCATAWAY, NJ, US, vol. 8, no. 5, 1 September 1998 (1998-09-01), XP011014498, ISSN: 1051-8215**
• **CHIEW T ET AL: "Region-based H.263+ coding for real-time video communication", VISUAL COMMUNICATIONS AND IMAGE PROCESSING; 21-1-2002 - 23-1-2002; SAN JOSE,, 21 January 2002 (2002-01-21), XP030080605,**
• **KIM ET AL.: "Automatic Conversion of Two-Dimensional Video into Stereoscopic Video", PROC. SPIE, vol. 6016, 15 November 2005 (2005-11-15), pages 601610-1-601610-8, XP040212406, DOI: 10.1117/12.628430**

**Description**

The present invention relates to a method and apparatus for generating a depth map from two frames in a 2D video stream and to a method and apparatus for generating a 3D video.

Preferred embodiments of the present invention may find application in 3D compatible flat panel LCDs, LED and plasma TVs which require producing stereo (3D) content from mono (2D) video or image source. Other possible usages can be found in devices such as monitors, projectors, set-top boxes. Preferred embodiments of the present invention may find application in the TV manufacturing industry, computer graphics field, cinema sector and medical applications (such as medical imaging).

The main problem that the producers of 3D TV encountered and will continue to encounter for some time to come is insufficiency of the 3D contents because to shoot a 3D film and to prepare 3D broadcast (stereo video) is very expensive. The solution of this problem is to create 3D content from 2D (mono) video contents by computing the depth map of the frames. Second video stream is rendered from the first one by using the estimated depth profile on the first video stream. The generated stereo video sequences may be displayed on a 3D display one after another in a time sharing fashion or with two different views in a spatially interleaved manner. In this manner, different views of the scene are fed to left and right eyes separately. The basic problem of computing the depth map is to separate the background and the foreground (segmentation).

An example of depth estimation is given in the technical paper "On Creating Depth Maps from Monoscopic Video using Structure from Motion": Ping Li, Dirk Farin, Rene Klein Gunnewiek, Peter H. N. de With in 27th Symposium on Information Theory in the Benelux, vol. p. 508-515, June 2006. This paper discloses a technique called Structure from Motion (SFM) is discussed as being one of the two important parts of their scheme for depth estimation. This method uses Optical Flow (OF) for Motion Estimation (ME). The generated motion vector field from OF is sparse. Therefore they obtain a dense field by using a sophisticated Delaunay triangulation technique. The obtained vector field is used to estimate a number of camera parameters and the scene structure from which then a multi-level depth map is estimated.

As also reported in the above prior art, SFM techniques have problems in non-static scenes with moving or deformable objects. For this reason to strengthen the method they also use another technique involving the use of monocular cues. The Delaunay method is also reported to fail in large smooth areas and around object boundaries. In addition, the SFM method is complex and computationally. The reason for its complexity is that it is very aggressive in obtaining a continuous depth map from the estimation of the whole structure in the frame. What is needed is a technique for estimating depth which is robust and less complex and costly in terms of computational effort.

Other schemes for creating 3D video from 2D video are known. For example, US-A-2007/024614 teaches generating depth maps from a 2D source image and smoothing these asymmetrically. Each depth map contains depth values focused on edges of local regions in the source image wherein the depth value assigned to each pixel in the map indicates the depth of the corresponding edge. One approach for the edge analysis process is based on estimating levels of blur (opposite to sharpness) at local regions in the 2D source image, and uses the principle that edges and lines are considered blurred if they are thick and sharp if they are thin. Alternatively, the depth map can be generated from the source image by estimating location of the edges and object boundaries using edge/line detecting techniques. In a further alternative, the depth map is generated based on estimating the luminance intensity distribution at each local region. The depth map is used to process the source image by a depth image based rendering algorithm to create at least one deviated image, which forms with the source image a set of 2D images. The depth map is used to form 3D images. Thus, this technique uses a single 2D image to generate a 3D image.

US-B-7161614 discloses a device and methods for converting a two-dimensional video into a three-dimensional video by calculating a depth map. Various methods are disclosed for calculating the depth map. In a first method, a screen is divided into a plurality of areas. Information related to high frequencies and contrasts of luminance, and a chrominance component are obtained from each of the areas. A depth estimate is then found for each of the areas from this information. In a second method, a motion vector is generated by comparing an image in the current field with an image in the preceding field, to extract as a motion vector the amount of movement and the direction of movement of a subject in the image. The image is segmented into feature areas and these areas are grouped on the basis of the chrominance information of the areas. Various depth maps are then obtained by considering for each area the detected motion, high frequency and contrast of luminance information, and a chrominance component, as well as the way in which the areas are grouped. A composite depth map is then obtained from the different maps. A third method calculates a motion vector between two images in a video and uses this, along with other factors, in creating a depth map. These methods generally rely on using visual "cues" to determine depth.

US-B-6996267 teaches a visual image system which operates on a three-dimensional visual image signal to control the degree of three-dimensionality of the stereoscopic image to try to reduce eye fatigue on the user.

US-B-6377625 relates to generating stereoscopic images from (2D) MPEG video. A motion vector generator generates motion vectors individually corresponding to the macroblocks in the picture. The motion vector field is analysed to determine the motion type of the current picture and uses this information in generating the stereoscopic image. In particular, this includes determining whether the current picture is a still picture, a horizontal motion picture, a non-horizontal motion picture, or a fast motion picture. This determination is used in generating a stereoscopic image appropriate to the type of motion.

US-A-2011/0007136 is concerned with processing a 3D video to interpolate the frames or to improve the quality of the image. X-Y motion vectors are calculated from consecutive frames on the left channel and on the right channel. These are processed to give a motion vector in the Z-direction. This Z-motion vector is used in processing the 3D video frames to interpolate or improve the quality of the images.

Reference is made to THOMAS MEIER ET AL: "Automatic Segmentation of Moving Objects for Video Object Plane Generation", IEEE TRANSACTIONS ON CIRCUITS AND SYSTEMS FOR VIDEO TECHNOLOGY, IEEE SERVICE CENTER, PISCATAWAY, NJ, US, vol. 8, no. 5, 1 September 1998 (1998-09-01), XP011014498, ISSN: 1051-8215. This publication discusses an automatic video sequence segmentation algorithm that extracts moving objects. A 2-D binary model of the object is matched against subsequent frames using the Hausdorff distance.

According to a first aspect of the present invention, there is provided a method of generating a method of generating a binary depth map from two frames in a 2D video stream, the method comprising:

> estimating a global motion vector and block motion vectors for the first frame;
> projecting the block motion vectors onto the global motion vector to obtain correlation parameters;
> calculating a metric for the number of static blocks in the first frame;
> determining whether the background is static or dynamic in accordance with the motion vectors, the number of static blocks and the correlation parameters; and,
> computing a binary depth map classifying the parts of the image as background or foreground in accordance with the motion vectors, the number of static blocks, the correlation parameters and the determination of whether the background is static or dynamic.

This method makes a binary depth map, i.e. classifying the parts of the image as "background" or "foreground". The method generates a global motion vector and block motion vectors between consecutive frames in the input video and find the correlation between them using a vector projection technique. The frame difference between the consecutive frames is also calculated for the blocks to give an indication of the number of static blocks. These parameters are first used to determine whether the background of the image is static or moving. Then, this determination is used together with the vector projection information and the frame difference information to compute a binary depth map by applying various metrics to the information for each block.

The present method is quite modest in the sense that by sacrificing precision for robustness and simplicity we try to obtain a binary depth map, focusing only on classifying the regions as either foreground or background regions. The method uses a simple vector projection operation on a single vector representing the frame background vector estimate which is considered to be a side product of any block matching based motion estimation method. The operations can be simple and computationally inexpensive. This is in contrast to prior art techniques which rely on fitting motion characteristics to multiple camera parameters in order to find a depth map, which is computationally expensive and prone to artefacts.

The preferred embodiment provides a systematic system which differentiates static scenes from non-static scenes and explain how this information together with the motion vectors, SAD block matching metrics and their frame statistics are used to obtain and apply morphology on the depth maps and to decide for enabling/disabling the desired 2D-3D conversion operation.

Preferably the method comprises determining whether the background is static or dynamic comprises hierarchically applying yes/no rules to the motion vectors, the number of static blocks and the correlation parameters. This provides a simple way of using the calculated parameters of the input frame to decide whether or not the background is static or dynamic.

Preferably the background is determined to be dynamic if 1) the global motion vector is non-zero and 2) there is a high amount of good-fit from the correlation parameters applied on all the blocks of the frame, good fit being where at least 70% of blocks have correlations of at least 75% with the global motion vector.

Preferably the background is determined to be static if 1) there are a large number of static blocks or 2) the most dominant motion vectors in the frame do not have enough dominancy.

Preferably the background is determined to be dynamic if 1) the global motion vector is non-zero and 2) there is a high amount of good-fit from the correlation parameters applied on all the blocks of the frame, else the background is determined to be static if 1) there are a large number of static blocks or 2) the most dominant motion vectors in the frame do not have enough dominancy.

Preferably if the background is unclassified by any other rule, the background is determined by default to be dynamic.

Preferably determining a binary depth map comprises hierarchically applying yes/no rules to the motion vectors, the number of static blocks, the correlation parameters and the determination of whether the background is static or dynamic on a per block basis to arrive at a binary decision of whether the block is background or foreground

Preferably a block is determined to be in a foreground region if block matching error metrics in a neighbourhood of blocks are high and vector variances are high.

Preferably, in the case the background is determined to be dynamic, the block is determined to be background if 1) the correlation parameter or 2) the correlation of the blocks motion vector with the global motion vector is high.

Preferably in the case the background is determined to be static, the block is determined to be background if 1) the number of static blocks gives a very good-fit or 2) the vector is the zero-vector or 3) the vector is very small and has a small difference metric.

Preferably the method comprises a block is determined to be in a foreground region if block matching error metrics in a neighbourhood of blocks are high and vector variances are high; else in the case the background is determined to be dynamic, the block is determined to be background if 1) the correlation parameter or 2) the correlation of the blocks motion vector with the global motion vector is high; and in the case the background is determined to be static, the block is determined to be background if 1) the number of static blocks gives a very good-fit or 2) the vector is the zero-vector or 3) the vector is very small and has a small difference metric.

Preferably the method comprises if the block is unclassified as background or foreground by any preceding rule, the block is determined to be foreground.

Preferably the method comprises applying spatial and/or temporal morphology to the depth map.

Preferably applying morphology comprises: determining the block to be foreground if the sum of the binary depth decisions, 0 representing foreground and 1 representing background, on the block and blocks in its neighbourhood is very low on the present frame $F_t$ or on the previous frame $F_{t-1}$; and/or determining the block to be background if the sum of the binary depth decisions, 0 representing foreground and 1 representing background, on the block and blocks in its neighbourhood is very high on the present frame $F_t$ or on the previous frame $F_{t-1}$. The binary depth map makes smoothing the depth map computationally simple.

Preferably the method comprises generating 3D video from 2D video, comprising for at least one frame of an input 2D video, generating a 3D image in accordance with the depth map provided by the method described above.

Preferably the method comprises disabling 3D generation for an input frame if the number of static blocks is high the frame is high.

Preferably the method comprises disabling 3D generation for an input frame if there is both a high amount of good-fit from the projection operation on a non-zero global motion vector, and block matching with zero vector gives a high amount of good-fit good fit being where at least 70% of blocks have correlations of at least 75% with the global motion vector.

According to a second aspect of the present invention, there is provided an apparatus for generating a depth map, the apparatus being arranged to perform the method described above.

Preferably the apparatus as described above is arranged to perform the method described above for generating a 3D video from an input 2D video.

It will be appreciated that any features expressed herein as being provided "in one example" or as being "preferable" may be provided in combination with any one or more other such features together with any one or more of the aspects of the present invention.

Embodiments of the present invention will now be described in detail with reference to the accompanying drawings, in which:

Figure 1 shows a schematic representation of an example of a method for generating a depth map according to an embodiment of the present invention;

Figure 2 is a schematic representation of a method of generating motion estimation parameters in the method of Figure 1;

Figures 3A and 3B show an example of vector projection calculations as part of the method of Figure 1;

Figure 4 is a schematic representation of a method of calculating vector projections;

Figure 5 is a schematic representation of a method of deciding whether background is static or not;

Figure 6 is a schematic representation of a method of computing a binary depth map;

Figure 7 is a schematic representation of a method of spatio-temporal morphology; and,

Figure 8 is a schematic representation of a method of arriving at a decision to enable or disable conversion.

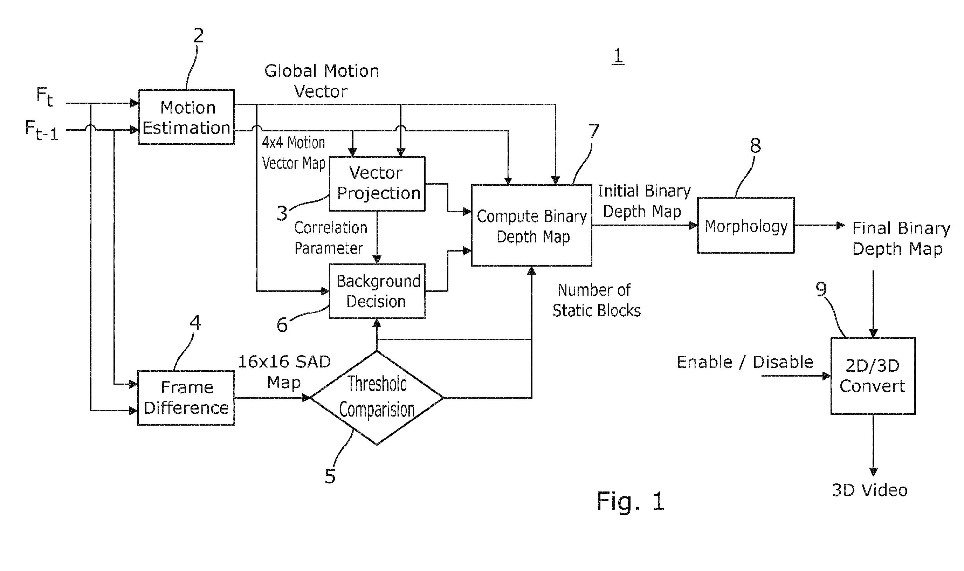

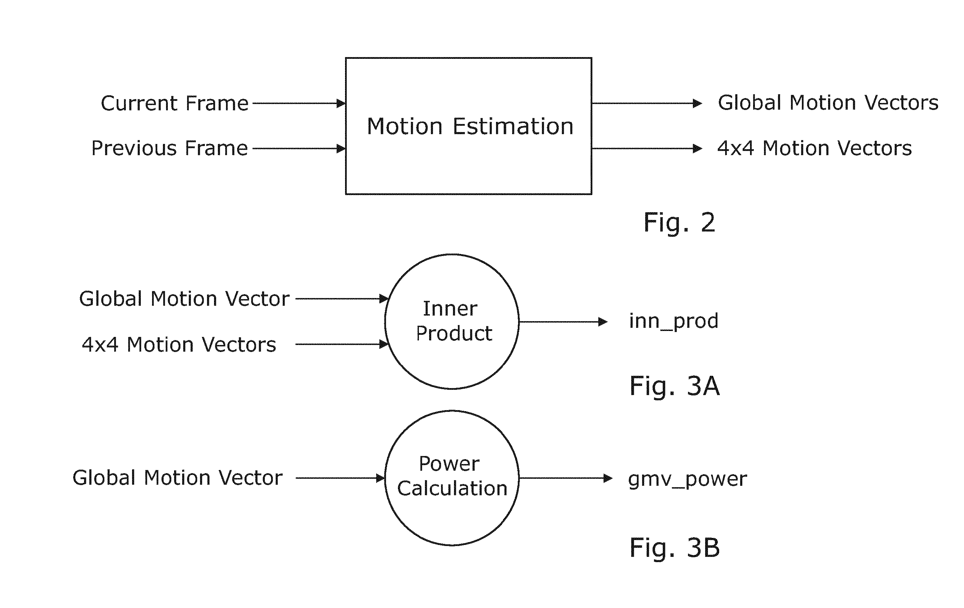

An example of the present method will now be described with reference to Figure 1 which illustrates schematically a system 1 for generating a depth map for two frames $F_t$ and $F_{t-1}$ of a video stream. The two consecutive frames $F_t$ and $F_{t-1}$ of a video sequence are input to a motion estimation block 2. As shown by Figure 2, the motion estimation block 2 determines motion vectors between the two frames $F_t$ and $F_{t-1}$. Any kind of block matching motion estimation method can be used to create motion vectors MV of each block and a global motion vector GMV estimate of the frame which denotes the best representative background motion. In the present example, the frames are divided into 4x4 blocks of pixels for block matching. However, other block sizes or motion estimation schemes are contemplated.

The motion vectors MV and GMV are fed to a vector projection block 3 which is used to generate correlation parameters which indicate how the block vectors MV and the global motion vector GMV are correlated, which as described below help for the separation of the frame into background and foreground.

The two input frames are also fed to a frame difference block 4. This block 4 calculates a difference metric between a block in the two frames assuming zero motion of the block between the frames, or put another way, with a zero vector between the blocks. Without loss of generality, the blocks may be 16x16 blocks of pixels. The Sum of Absolute Differences (SAD) is used in this example as a metric of the difference between corresponding blocks. So, for each 16x16 block in the first frame, the SAD is calculated between the pixels in the first frame and the pixels in the second frame. The SAD is put through a threshold comparison block 5 which tests if the SAD exceeds some predetermined threshold value. If the SAD metric is lower than the threshold, this indicates that there is a close match between the block in the first frame $F_{t+1}$ and second frame $F_t$ assuming zero motion, which is an indication that the block may be static. Conversely, if the SAD metric is higher than the threshold, this indicates that there is not a close match between blocks assuming zero motion, which is an indication that the block may be moving. The threshold may be determined by experiment. The results of the comparisons are used to generate a count of the number of static blocks in the frame. It will be appreciated that other error metrics can be used within the scope of the invention.

The motion vectors GMV and MVs, the correlation parameters and the number of static blocks are passed to a background decision block 6 which decides based on these inputs whether the background to the frame $F_t$ is static or dynamic. This is an important part of the depth map estimation process and is discussed in more detail below.

The correlation parameters, number of static blocks and the background decision are passed together with the motion vectors GMV and MVs to a Depth Map Calculation block 7, which calculates a binary depth map for the frame $F_t$ wherein each block is attributed a value of '1' or '0'. If the block is decided as being background, its value becomes '1'; otherwise, its value becomes '0'.

In practice, motion decisions and hence depth map decisions are likely to be spatially and temporally correlated. Therefore spatiotemporal morphology is applied by block 8 on the initial binary depth map to create a smooth, final binary depth map.

The final depth map is then used by block 9 in converting the 2D input video into a 3D video.

The various blocks of the system 1 are now described in more details.

VECTOR PROJECTION BLOCK

The vector projection block 3 computes projections on the global motion vector and block matching metrics on the zero vector.

After the motion estimation step shown by Figure 2, the frame is divided into blocks (having without loss of generality 4x4 pixel elements in this example). Each block making up a frame has its own block motion vector (MV), and each frame has one global motion vector (GMV). By using these vectors, vector projections on the global motion vector and block matching metrics on the zero vector are calculated as follows.

First, as shown by Figure 3, the inner product (inner product$_{GMV\&MV}$) of each block motion vector MV and the global motion vector GMV is calculated:-

$$\text{inner product}_{GMV\&MV} = MV_{vertical} \times GMV_{vertical} + MV_{horizontal} \times GMV_{horizontal}$$

In addition to the inner product, the global motion vector power (power$_{GMV}$) is calculated:-

$$\text{power}_{GMV} = GMV_{vertical} \times GMV_{vertical} + GMV_{horizontal} \times GMV_{horizontal}$$

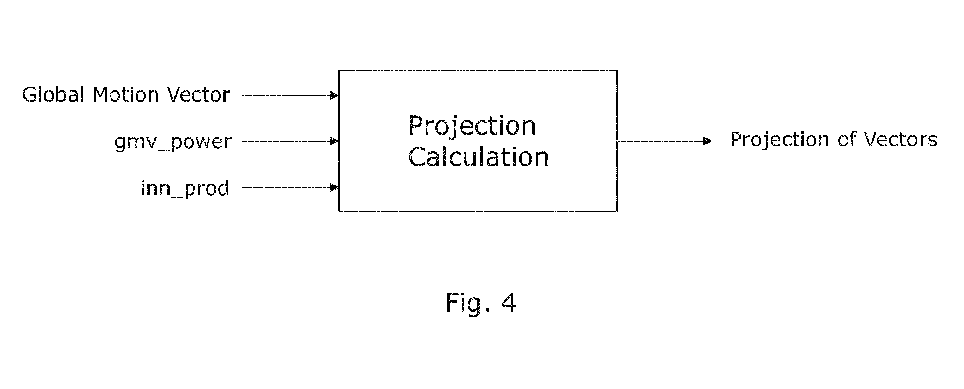

Next, as shown by Figure 4, the vertical and horizontal projection of the global motion vector GMV on each block motion vector MV is calculated:-

$$\text{projection}_{vertical} = GMV_{vertical} \times (\text{inner product}_{GMV\&MV} \, / \, \text{power}_{GMV})$$

$$\text{projection}_{horizontal} = GMV_{horizontal} \times (\text{inner product}_{GMV\&MV} \, / \, \text{power}_{GMV})$$

and the power of the projection is calculated:

$$\text{power}_{projection} = \text{projection}_{vertical} \times \text{projection}_{vertical} +$$
$$\text{projection}_{horizontal} \times \text{projection}_{horizontal}$$

Even though projection power given by the above equation is always non-negative it is desired for this metric to have the same sign as the inner product. Accordingly, if the inner product for a block is negative, then power$_{projection}$ for that block is multiplied by -1 to comply with this requirement.

Thus, the projection power (also called the correlation parameter herein) gives a parameter indicating the correlation of the GMV on the MVs. A high positive value gives an indication that the block motion is similar to the global motion of the frame.

In order to preserve causality, in other words for the sake of simpler implementation, the computed metrics from the previous frame $F_{t-1}$ are used for calculating the depth field of the current frame $F_t$.

BACKGROUND DECISION BLOCK 6

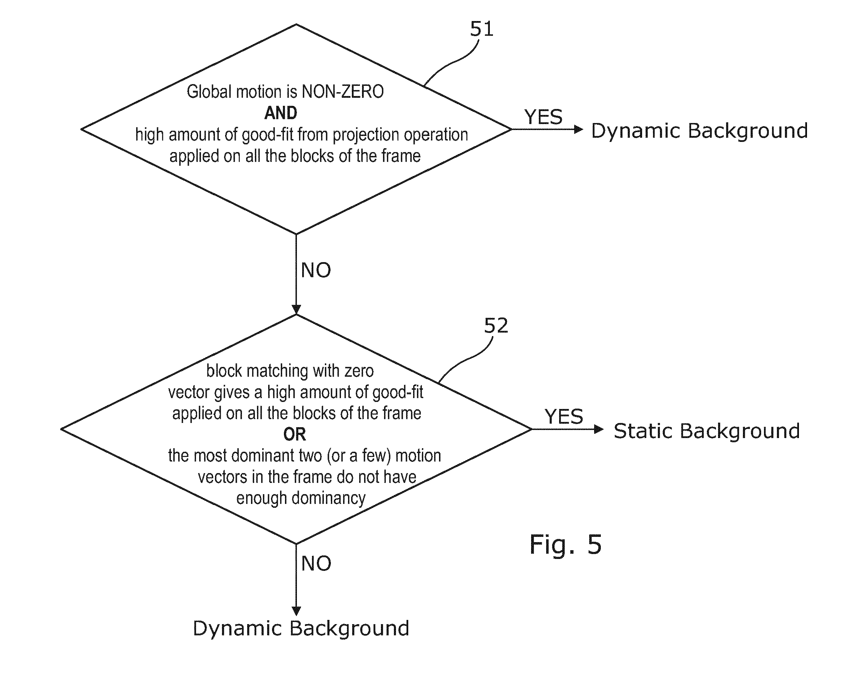

Figure 5 shows a flow chart for the decision making process for deciding whether each block in the frame is background or foreground.

Check 1 (highest priority check):

A first check is performed at step 51. This check tests IF (1) the global motion is non-zero (i.e. GMV is non zero) AND (2) there is a high amount of good-fit from projection operation applied on all the blocks of the frame (i.e. a high proportion of the correlation parameters are high signifying a high proportion of motion vectors MV match the global motion vector GMV) THEN the background is very unlikely to be static. If Check 1 is satisfied then the frame is decided to have a dynamic background (e.g. there is a camera pan or tilt).

Good fit is related to video resolution. However, in a preferred embodiment, good fit can be defined as being at least 70% of blocks have correlations of at least 75% with the global motion vector.

If the first check is not satisfied, then a second check is performed at step 52.

Check 2 (lower priority check):

The second check tests IF (1) the block matching with a zero vector gives a high amount of good-fit applied on all the blocks of the frame (i.e. there is a large number of static blocks determined at blocks 4 and 5) OR (2) the most dominant few (e.g. two) motion vectors in the frame do not have enough dominancy then this is an indicator that either the background is static, or there is a very chaotic motion scenario resulting the frame having a highly large number of independently moving objects and no background dominancy. If Check 2 is satisfied then the frame is decided to have a static background (i.e. there is no camera pan or tilt).

In a preferred embodiment, a high amount of good fit on the zero vector is determined to be at least 60% of blocks "match" on the zero vector. "Dominant" means that the number of a particular vector type is larger than other vector types. (The most dominant motion vector in the frame is called the GMV.) However, these are parameters. As will be appreciated, these may be adjusted through experimentation according to the particular application, to get good results.

Default:

If neither of the two checks is satisfied then frame is by default considered to have a dynamic background. In practice however one of the two checks is satisfied most of the time.

Thus, the frame is determined to have a static or a dynamic background by a simple and hierarchical set of comparison operations using previously calculated metrics.

COMPUTE THE BINARY DEPTH MAP BLOCK 7

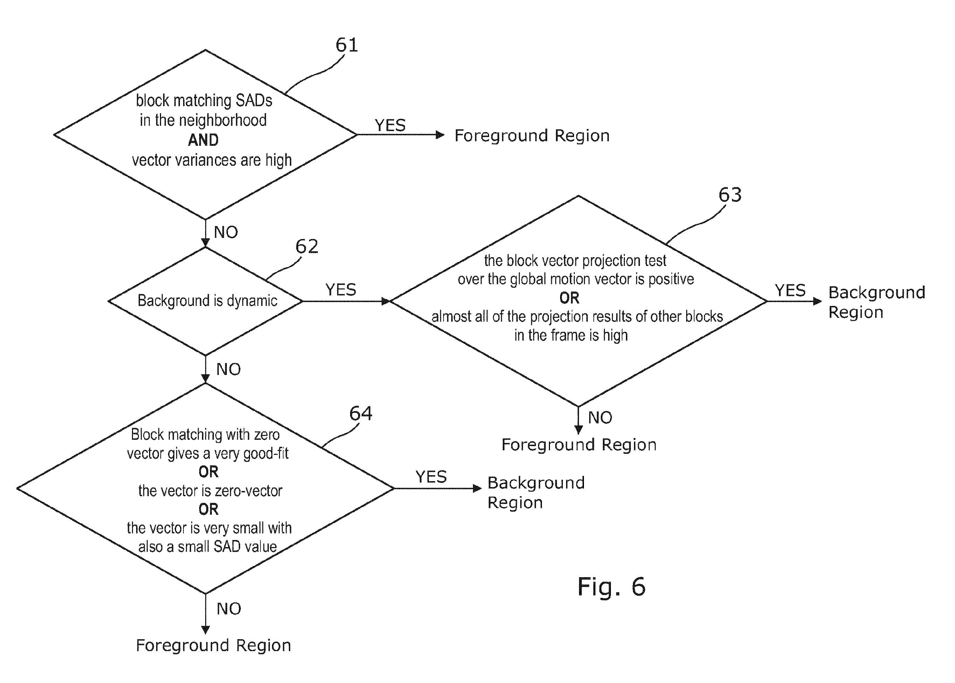

Figure 6 shows a flow chart for the decision making process for deciding whether each block in the frame is background or foreground. The main goal of this step is to apply foreground-background (FG-BG) segmentation on the frame, i.e. putting each block in one of those two categories.

Check 1 (higher priority check):

A first check is performed at step 61. This check tests IF block matching on the zero vector in a neighbourhood of blocks gives a good fit AND vector variances are high THEN the region is decided to be a FG region.

Block matching in the neighbourhood of blocks means the SAD values coming from the motion estimation block 3 must be small. In a preferred embodiment, for each pixel there is at most an 8 to 16 pixel value difference (relative to a pixel value range of 0..255) between two pixels in the block. "Vector variance" relates to the number of different motion vectors. If the number of different vectors, i.e. variety of the vectors, is high, then the vector variance is high in that region.

Segmentation is itself an ill-conditioned operation. It is generally never perfect and precise. When there is an ambiguity at FG-BG boundaries and different object boundaries, it is preferable to put the block in the FG category to have less visual artefacts. Having a good fit between matched blocks in a neighbourhood and a high variance between vectors in a neighbourhood also indicates an ambiguity which may correspond to the possible presence of a boundary. The size of the neighbourhood can be chosen by experiment to give the best results. For example, the size of the neighbourhoods can be selected as 3x3 or 3x5 among other possibilities. Thus, ambiguous blocks are put in the FG category.

If the first check is not satisfied, then a second check is performed:

Check 2 (lower priority check):

This check depends on whether the background has been determined to be static or dynamic by the background decision block 6. In practice, the background decision from the previous frame is preferably used in this check for determining the depth map of a current frame. Thus, the flow chart branches at step 62 depending on whether the background is static or dynamic.

Check2_d (dynamic BG):

If the background is dynamic, the second check is performed at step 63. This check tests (1) if the block vector projection test over the global motion vector is positive (i.e. the correlation parameter is positive and high) OR (2) no matter what this particular projection result is, if almost all of the projection results of other blocks in the frame are high (i.e. the correlation of the MVs with the GMV is high signifying almost fully uniformly moving frame scenario) THEN the block is put in the background category.

In a preferred embodiment, in the first part of the test, the correlation parameter is taken to be high if it is larger than half of the gmv-power value calculated in the estimation block 3. Also, in the second part of the test, the correlation of the MVs with the GMV is taken to be high if at least 70% of all blocks have a "good match" with the GMV, e.g. have correlations of at least 75% with the GMV.

Check2_s (static BG):

If the background is static, the second check is performed at step 64. This check tests IF (1) block matching with zero vector gives a very good-fit (i.e. the number of static blocks determined at steps 4 and 5 is high) OR (2) the block MV vector is zero-vector OR (3) the block MV vector is very small and also the block has a small SAD value THEN the block is put in the background category.

In a preferred embodiment, in the first part, the number of static blocks may be considered to be high when the SAD value is less than 1 * the numbers of pixel in the block, i.e. for each pixel the maximum difference must be less than "1 " (relative to a pixel value range of 0..255). In the second part, the block MV vector can be considered to be zero-vector if zero or substantially zero. In the third part, the block MV vector can be considered to be very small if the total size of the vector (sum of x and y components of the vector) is less than a small threshold (e.g. less than 5 to 10). Again, the various thresholds used in this test can be tuned by experiment to give the best results.

Default:

If neither of the two checks is satisfied then the block is by default put into the foreground category again to have less visual artefacts.

Thus, an initial binary depth map is created for the frame.

<u>MORPHOLOGY BLOCK 8</u>

In this block spatiotemporal morphology operations are applied on the initial depth map computed by block 7. The decisions taken in block 7 are independent. However in practice motion decisions and hence depth decisions are spatially and temporally correlated. Therefore we apply spatiotemporal morphology on the decisions.

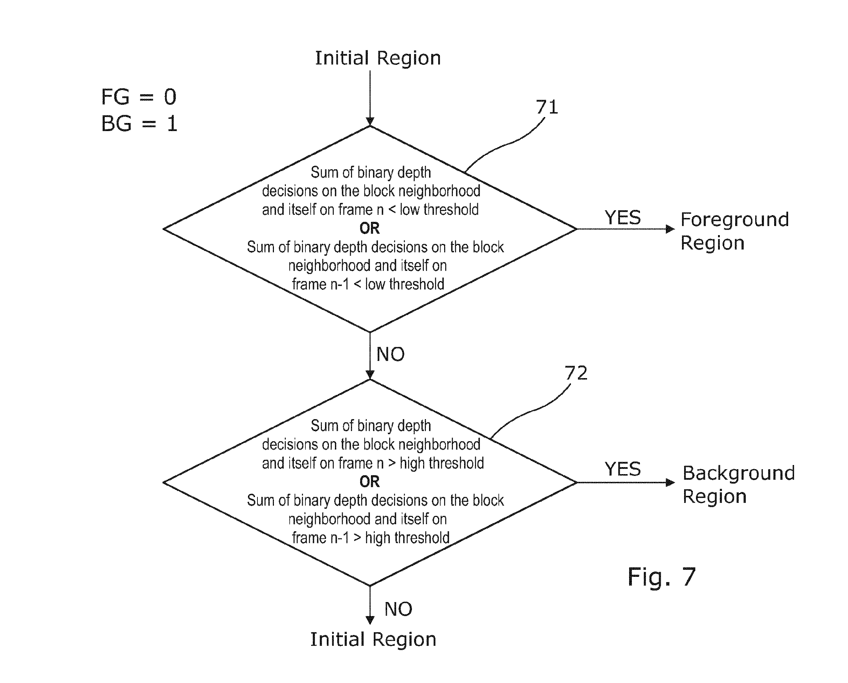

Figure 7 shows a flow chart of the decision taking process for deciding for each block whether or not to override the previous classification of the block as of BG-FG.

At step 71, a first check is performed. This check tests if the sum of the binary depth decisions (allocating say 0 representing FG and 1 representing BG) on the block and blocks in its neighbourhood is low (defined by a low threshold) (1) on the present frame $F_t$ OR (2) on the previous frame $F_{t-1}$ THEN the block is put in FG category.

For example, in a preferred embodiment, the check tests if the sum of the binary depth decisions on the frame is less than 80% of the number of blocks. Taking for example the case where the neighbourhood is chosen to be a 5x3 window (although any reasonably sized window can be chosen), there are 15 blocks and thus 15 decisions as to the block being background or foreground. Thus, the maximum value of the sum of decisions is 15 (i.e. all 15 blocks are BG with a value of "1 "). The test checks if the sum of binary decisions is less than 80% of 15, i.e. less than 12, or the previous binary decision of the current block is FG, the current binary decision of the current block becomes FG.

At step 72, a second check is performed for the opposite case. This check tests if the sum of binary depth decisions (allocating say 0 representing FG and 1 representing BG) on the block and blocks in its neighbourhood is high (defined by a high threshold) (1) on the present frame $F_t$ OR (2) on the previous frame $F_{t-1}$ THEN the block is put into BG category. For example, in a preferred embodiment, the check tests if the sum of the binary depth decisions on the frame is greater than 20% of the number of blocks.

As will be appreciated, the precise thresholds used for these tests can be selected by experimentation to produce the best results according the application.

If neither condition applies then the block preserves its initial depth value before entering the morphology 8 (i.e. determined by the depth map block 7). The size of the neighbourhoods can be selected as 3x3 or 3x5 among other possibilities.

<u>DISABLING 2D-3D CONVERSION</u>

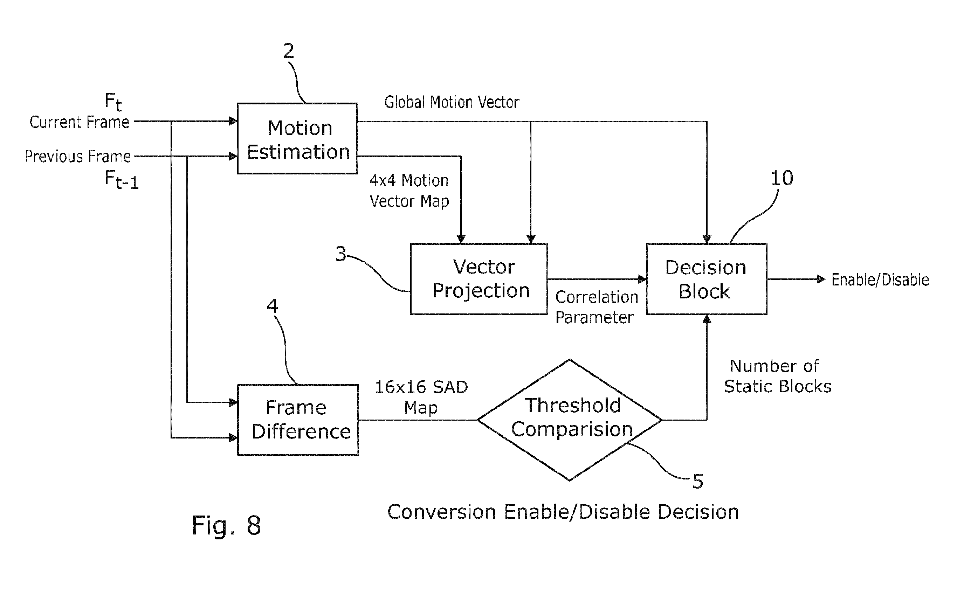

As described, the final depth map generated by the method described above can be used to convert the 2D video stream to 3D video by any suitable technique applied by block 9, of which there are many described in the prior art. However, there are situations where converting the 2D video to 3D video is not desirable for a particular frame or frames. Figure 8 shows a scheme for deciding whether to disable 2D/3D conversion for a frame. The motion estimation block 2, the vector projection block 3, the frame difference block 4 and threshold comparison block 5 may be the same as those shown by Figure 1. A decision block 10 receives the motion vectors from the motion estimation block 2, the correlation parameters from the vector projection block 3, and the number of static blocks metric from the threshold comparison block 5. The decision block 10 uses two criteria which are now discussed where the 2D-3D conversion operation is disabled for a video frame. The number of criteria can be increased or decreased depending on the applied depth estimation methods and their efficiency.

Criterion 1:

Since the 2D-3D conversion method is based on motion estimation, if there is almost no non-zero motion in the frame then conversion is disabled. This is calculated by checking the number of static blocks metric against the total number of blocks. This criterion is somewhat different from case where there is a static background. In the case where there is a static background there might still be independently moving objects, whereas the present criterion is checking for no non-zero motion in the frame.

If there are additional depth estimation routines which do not use motion estimation, such as methods which use monocular cues, e.g. colour, horizon lines, blur characteristics variation etc, then conversion can be kept enabled in static scenes.

Criterion 2:

Motion estimation is an ill-conditioned process. Therefore it will fail in certain situations. The impact of the failure will be different depending on for what application the motion estimation is used. An application of 2D-3D conversion is in general very robust against motion estimation errors. However there is one particular case for which it is very sensitive. This is when there is both a high amount of good-fit from the projection operation on a non-zero global (background) motion vector AND block matching with zero vector gives a high amount of good-fit, when both are applied on all the blocks of the frame. This situation is like the situation when both of the checks in the vector projection step are satisfied, i.e. there is a high correlation between the GMV and the MVs and there is a high number of static blocks (the thresholds used however may vary). In this case, two indicators measuring opposite metrics both give high values, which is a tough and conflicting, i.e. ill-conditioned, case for a motion estimation scheme as well.

As explained above, in a preferred embodiment a high amount of "good-fit" can be considered as being at least 70% of blocks having a good fit, and a good fit being the projection having a value of at least 75%.

Embodiments of the present invention have been described with particular reference to the examples illustrated. However, it will be appreciated that variations and modifications may be made to the examples described within the scope of the present invention.

**Claims**

1.  A method of generating a binary depth map from two frames in a 2D video stream, the method comprising:

    estimating (2) a global motion vector and block motion vectors for the first frame;
    projecting (3) the block motion vectors onto the global motion vector to obtain correlation parameters;
    calculating (4,5) a metric for the number of static blocks in the first frame;
    determining (6) whether the background is static or dynamic in accordance with the motion vectors, the number of static blocks and the correlation parameters; and,
    computing a binary depth map (7) classifying the parts of the image as background or foreground in accordance with the motion vectors, the number of static blocks, the correlation parameters and the determination of whether the background is static or dynamic.

2.  A method according to claim 1, wherein determining whether the background is static or dynamic comprises hierarchically applying yes/no rules to the motion vectors, the number of static blocks and the correlation parameters and/or
    determining a binary depth map comprises hierarchically applying yes/no rules to the motion vectors, the number of static blocks, the correlation parameters and the determination of whether the background is static or dynamic on a per block basis to arrive at a binary decision of whether the block is background or foreground.

3.  A method according to claim 1 or claim 2, wherein the background is determined to be dynamic if

    1) the global motion vector is non-zero
    and
    2) there is a high amount of good-fit from the correlation parameters applied on all the blocks of the frame, good fit being where at least 70% of blocks have correlations of at least 75% with the global motion vector.

4.  A method according to any of claims 1 to 3, wherein the background is determined to be static if

    1) there are a large number of static blocks
    or
    2) the most dominant motion vectors in the frame do not have enough dominancy.

5.  A method according to any of claims 1 to 4, wherein if the background is unclassified by any other rule, the background is determined by default to be dynamic.

6. A method according to any of claims 1 to 5, wherein a block is determined to be in a foreground region if block matching error metrics in a neighbourhood of blocks are high AND vector variances are high.

7. A method according to claim 6, wherein, in the case the background is determined to be dynamic, the block is determined to be background if

    1) the correlation parameter
    or
    2) the correlation of the blocks motion vector with the global motion vector is high.

8. A method according to claim 6 or claim 7, wherein, in the case the background is determined to be static, the block is determined to be background if

    1) the number of static blocks gives a very good-fit
    or
    2) the vector is the zero-vector
    or
    3) the vector is very small and has a small difference metric.

9. A method according to claim 6, wherein a block is determined to be in a foreground region if block matching error metrics in a neighbourhood of blocks are high AND vector variances are high; else in the case the background is determined to be dynamic, the block is determined to be background if

    1) the correlation parameter
    or
    2) the correlation of the blocks motion vector with the global motion vector is high;
    and in the case the background is determined to be static, the block is determined to be background if
    1) the number of static blocks gives a very good-fit
    or
    2) the vector is the zero-vector
    or
    3) the vector is very small and has a small difference metric.

10. A method according to claims 6 or claim 7, wherein if the block is unclassified as background or foreground by any preceding rule, the block is determined to be foreground.

11. A method according to any of claims 1 to 10, comprising applying spatial and/or temporal morphology to the depth map, which preferably comprises:

    determining the block to be foreground if the sum of the binary depth decisions, 0 representing foreground and 1 representing background, on the block and blocks in its neighbourhood is very low on the present frame $F_t$ or on the previous frame $F_{t-1}$; and/or
    determining the block to be background if the sum of the binary depth decisions, 0 representing foreground and 1 representing background, on the block and blocks in its neighbourhood is very high on the present frame $F_t$ or on the previous frame $F_{t-1}$.

12. A method of generating 3D video from 2D video, comprising for at least one frame of an input 2D video, generating (9) a 3D image in accordance with the depth map provided by the method of any one or more of claims 1 to 11.

13. A method according to claim 12, comprising disabling 3D generation for an input frame if

    a) the number of static blocks is high the frame is high and/or
    b) there is both

a high amount of good-fit from the projection operation on a non-zero global motion vector,
and
block matching with zero vector gives a high amount of good-fit, good fit being where at least 70% of blocks have correlations of at least 75% with the global motion vector.

14. Apparatus for generating a depth map, the apparatus being arranged to perform the method of any of claims 1 to 11.

15. Apparatus according to claim 14, the apparatus being arranged to perform the method of any of claims 12 to 13 for generating a 3D video from an input 2D video.

**Patentansprüche**

1. Verfahren zum Erstellen einer binären Tiefenkarte aus zwei Rahmen in einem 2D-Video-Stream, wobei das Verfahren umfasst:

Abschätzen (2) von einem globalen Bewegungsvektor und Blockbewegungsvektoren für den ersten Rahmen;
Projizieren (3) der Blockbewegungsvektoren auf den globalen Bewegungsvektor, um Korrelationsparameter zu erhalten;
Berechnen (4, 5) einer Metrik für die Anzahl an statischen Blöcken im ersten Rahmen;
Bestimmen (6), ob der Hintergrund in Übereinstimmung mit den Bewegungsvektoren, der Anzahl an statischen Blöcken und den Korrelationsparametern statisch oder dynamisch ist; und
Berechnen einer binären Tiefenkarte (7), die die Teile des Bildes in Übereinstimmung mit den Bewegungsvektoren, der Anzahl an statischen Blöcken, der Korrelationsparameter und der Bestimmung, ob der Hintergrund statisch oder dynamisch ist, als Hintergrund oder Vordergrund klassifiziert.

2. Verfahren nach Anspruch 1, wobei das Bestimmen, ob der Hintergrund statisch oder dynamisch ist, das hierarchische Anwenden von Ja- / Nein-Regeln auf die Bewegungsvektoren, die Anzahl an statischen Blöcken und die Korrelationsparameter umfasst und / oder
das Bestimmen einer binären Tiefenkarte das hierarchische Anwenden von Ja- / Nein-Regeln auf die Bewegungsvektoren, die Anzahl von statischen Blöcken, die Korrelationsparameter und die Bestimmung, ob der Hintergrund statisch oder dynamisch ist, auf einer Pro-Block-Basis umfasst, um zu einer binären Entscheidung zu kommen, ob der Block Hintergrund oder Vordergrund ist.

3. Verfahren nach Anspruch 1 oder Anspruch 2, wobei bestimmt wird, dass der Hintergrund dynamisch ist, falls

1) der globale Bewegungsvektor nicht Null ist
und
2) es eine große Anzahl an guten Passungen der Korrelationsparameter, die auf alle Blöcke des Rahmens angewandt werden, gibt, wobei eine gute Passung vorliegt, wenn mindestens 70 % der Blöcke Korrelationen von mindestens 75 % mit dem globalen Bewegungsvektor haben.

4. Verfahren nach einem der Ansprüche 1 bis 3, wobei bestimmt wird, dass der Hintergrund statisch ist, falls

1) es eine große Anzahl an statischen Blöcken gibt
oder
2) die dominantesten Bewegungsvektoren im Rahmen nicht genügend Dominanz haben.

5. Verfahren nach einem der Ansprüche 1 bis 4, wobei standardmäßig bestimmt wird, dass der Hintergrund dynamisch ist, falls der Hintergrund durch eine andere Regel nicht klassifiziert ist.

6. Verfahren nach einem der Ansprüche 1 bis 5, wobei bestimmt wird, dass ein Block in einer Vordergrundregion ist, falls Blockübereinstimmungsfehlermetriken in einer Nachbarschaft an Blöcken hoch sind UND Vektorvarianzen hoch sind.

7. Verfahren nach Anspruch 6, wobei, falls bestimmt wird, dass der Hintergrund dynamisch ist, bestimmt wird, dass der Block Hintergrund ist, falls

1) der Korrelationsparameter
oder
2) die Korrelation des Blockbewegungsvektors mit dem globalen Bewegungsvektor hoch ist.

8. Verfahren nach Anspruch 6 oder Anspruch 7, wobei, falls bestimmt wird, dass der Hintergrund statisch ist, bestimmt wird, dass der Block Hintergrund ist, falls

1) die Anzahl an statischen Blöcken eine sehr gute Passung ergibt
oder
2) der Vektor der Nullvektor ist
oder
3) der Vektor sehr klein ist und eine kleine Differenzmetrik hat.

9. Verfahren nach Anspruch 6, wobei bestimmt wird, dass ein Block in einer Vordergrundregion ist, falls Blockübereinstimmungsfehlermetriken in einer Nachbarschaft an Blöcken hoch sind UND Vektorvarianzen hoch sind; ansonsten wird, falls bestimmt wird, dass der Hintergrund dynamisch ist, bestimmt, dass der Block Hintergrund ist, falls

1) der Korrelationsparameter
oder
2) die Korrelation des Blockbewegungsvektors mit dem globalen Bewegungsvektor hoch ist; und falls bestimmt wird, dass der Hintergrund statisch ist, wird bestimmt, dass der Block Hintergrund ist, falls
1) die Anzahl an statischen Blöcken eine sehr gute Passung ergibt
oder
2) der Vektor der Nullvektor ist
oder
3) der Vektor sehr klein ist und eine kleine Differenzmetrik hat.

10. Verfahren nach Anspruch 6 oder Anspruch 7, wobei, falls der Block nicht durch eine vorhergehende Regel als Hintergrund oder Vordergrund klassifiziert wird, bestimmt wird, dass der Block Vordergrund ist.

11. Verfahren nach einem der Ansprüche 1 bis 10, umfassend das Anwenden räumlicher und / oder zeitlicher Morphologie auf die Tiefenkarte, was bevorzugt umfasst:

Bestimmen, dass der Block Vordergrund ist, falls die Summe der binären Tiefenentscheidungen, wobei 0 den Vordergrund repräsentiert und 1 den Hintergrund repräsentiert, auf dem Block und den Blöcken in seiner Nachbarschaft auf dem aktuellen Rahmen $F_t$ oder auf dem vorherigen Rahmen $F_{t-1}$ sehr niedrig ist; und / oder Bestimmen, dass der Block Hintergrund ist, falls die Summe der binären Tiefenentscheidungen, wobei 0 den Vordergrund repräsentiert und 1 den Hintergrund repräsentiert, auf dem Block und den Blöcken in seiner Nachbarschaft auf dem aktuellen Rahmen $F_t$ oder auf dem vorherigen Rahmen $F_{t-1}$ sehr hoch ist.

12. Verfahren zum Erstellen eines 3D-Videos aus einem 2D-Video, umfassend für mindestens einen Rahmen eines Eingangs-2D-Videos das Erstellen (9) eines 3D-Bildes in Übereinstimmung mit der anhand des Verfahrens nach einem oder mehreren der Ansprüche 1 bis 11 zur Verfügung gestellten Tiefenkarte.

13. Verfahren nach Anspruch 12, umfassend das Deaktivieren der 3D-Erstellung für einen Eingangsrahmen, falls

a) die Anzahl an statischen Blöcken hoch ist der Rahmen hoch ist und / oder
b) sowohl

eine hohe Anzahl an guten Passungen aus dem Projektionsbetrieb auf einem globalen Bewegungsvektor, der nicht Null ist, vorhanden ist
als auch
die Blockübereinstimmung mit dem Nullvektor eine hohe Anzahl an guten Passungen ergibt, wobei eine gute Passung vorliegt, wenn mindestens 70 % der Blöcke Korrelationen von mindestens 75 % mit dem globalen Bewegungsvektor haben.

14. Vorrichtung zum Erstellen einer Tiefenkarte, wobei die Vorrichtung so angeordnet ist, dass sie das Verfahren nach einem der Ansprüche 1 bis 11 durchführt.

15. Vorrichtung nach Anspruch 14, wobei die Vorrichtung so angeordnet ist, dass sie das Verfahren nach einem der Ansprüche 12 bis 13 zum Erstellen eines 3D-Videos aus einem Eingangs-2D-Video durchführt.

**Revendications**

1. Une méthode de production d'une carte profondeur binaire à partir de deux images dans un flux vidéo bidimensionnel, cette méthode comprenant :

   l'estimation (2) d'un vecteur de mouvement global et de mouvement par blocs pour la première image ;
   la projection (3) des vecteurs de mouvement par blocs sur le vecteur de mouvement global afin d'obtenir des paramètres de corrélation ;
   le calcul (4,5) d'une métrique pour le nombre de blocs statiques dans la première image ;
   la détermination (6) de l'arrière-plan comme étant statique ou dynamique, en fonction des vecteurs de mouvement, du nombre de blocs statiques et des paramètres de corrélation ; et
   le calcul d'une carte profondeur binaire (7) classant les parties de l'image comme étant dans l'arrière-plan ou au premier plan en fonction des vecteurs de mouvement, du nombre de blocs statiques, des paramètres de corrélation, et de la détermination de l'arrière-plan comme étant statique ou dynamique.

2. Une méthode selon la revendication 1, dans laquelle la détermination de l'arrière-plan comme étant statique ou dynamique comporte l'application hiérarchique de règles oui/non aux vecteurs de mouvement, au nombre de blocs statiques, et aux paramètres de corrélation,
   et/ou
   la détermination d'une carte profondeur binaire comporte l'application hiérarchique de règles oui/non aux vecteurs de mouvement, au nombre de blocs statiques, aux paramètres de corrélation, et à la détermination de l'arrière-plan comme étant statique ou dynamique par bloc, afin de parvenir à une décision binaire sur le fait que le bloc est en arrière-plan ou au premier plan.

3. Une méthode selon la revendication 1 ou la revendication 2, dans laquelle l'arrière-plan est déterminé comme étant dynamique si

   1) le vecteur de mouvement global est autre que zéro,
   et
   2) il existe une quantité élevée de bon ajustement d'après les paramètres de corrélation sur tous les blocs de l'image, le bon ajustement survenant lorsqu'au moins 70% des blocs présentent des corrélations d'au moins 75% avec le vecteur de mouvement global.

4. Une méthode selon les revendications 1 à 3, dans laquelle l'arrière-plan est déterminé comme étant statique si

   1) il y a un grand nombre de blocs statiques,
   ou
   2) les vecteurs de mouvement les plus dominants de l'image ne présentent pas une dominance suffisante.

5. Une méthode selon les revendications 1 à 4, dans laquelle si l'arrière-plan est non classé par toute autre règle, l'arrière-plan est déterminé par défaut comme étant dynamique.

6. Une méthode selon les revendications 1 à 5, dans laquelle un bloc est déterminé comme se trouvant dans une zone au premier plan si les métriques d'erreur de correspondance de blocs dans un voisinage de blocs sont élevées ET les variances de vecteurs sont élevées.

7. Une méthode selon la revendication 6, dans laquelle, si l'arrière-plan est déterminé comme étant dynamique, le bloc est déterminé comme étant l'arrière-plan si

   1) le paramètre de corrélation
   ou
   2) la corrélation entre le vecteur de mouvement des blocs et le vecteur de mouvement global est élevé(e).

8. Une méthode selon la revendication 6 ou la revendication 7, dans laquelle, si l'arrière-plan est déterminé comme étant statique, le bloc est déterminé comme étant l'arrière-plan si

   1) le nombre de blocs statiques est un bon ajustement
   ou

2) le vecteur est le vecteur zéro

ou

3) le vecteur est très petit et présente une légère métrique de différence.

9. Une méthode selon la revendication 6, dans laquelle un bloc est déterminé comme étant dans une zone de premier plan si la métrique d'erreur de correspondance des blocs dans un voisinage de blocs est élevée ET les variances de vecteurs sont élevées ; sauf s'il est établi que l'arrière-plan est dynamique, le bloc est déterminé comme étant l'arrière-plan si

1) le paramètre de corrélation

ou

2) la corrélation entre le vecteur de mouvement des blocs et le vecteur de mouvement global est élevé(e).

et dans le cas où l'arrière-plan est déterminé comme étant statique, le bloc est déterminé comme étant l'arrière-plan si

1) le nombre de blocs statiques est un bon ajustement

ou

2) le vecteur est le vecteur zéro

ou

3) le vecteur est très petit et présente une légère métrique de différence.

10. Une méthode selon la revendication 6 ou la revendication 7, dans laquelle si le bloc n'est pas classé comme appartenant à l'arrière-plan ou au premier plan par une quelconque des règles précédentes, le bloc est déterminé comme étant le premier plan.

11. Une méthode selon une quelconque des revendications 1 à 10, comportant l'application d'une morphologie spatiale et/ou temporelle à la carte profondeur, comprenant de préférence :

la détermination du bloc comme étant au premier plan si la somme des décisions de profondeur binaires, 0 représentant le premier plan et 1 représentant l'arrière-plan, sur le bloc et les blocs dans son voisinage est très faible sur l'image présente $F_t$ ou sur l'image précédente $F_{t-1}$ ; et/ou

la détermination du bloc comme étant en arrière-plan si la somme des décisions de profondeur binaires, 0 représentant le premier plan et 1 représentant l'arrière-plan, sur le bloc et les blocs dans son voisinage est très élevée sur l'image présente $F_t$ ou sur l'image précédente $F_{t-1}$.

12. Une méthode de production d'une vidéo tridimensionnelle à partir d'une vidéo bidimensionnelle, comprenant, pour au moins une image d'une vidéo bidimensionnelle d'entrée, la production (9) d'une image tridimensionnelles en accord avec la carte profondeur réalisée avec la méthode d'une quelconque des revendications 1 à 11, ou plusieurs de celles-ci.

13. Une méthode selon la revendication 12, comprenant la désactivation de la production tridimensionnelle pour une image d'entrée si

a) le nombre de blocs statiques est élevé, l'image est élevée, et/ou

b) il existe à la fois

une quantité importante de bon ajustement de l'opération de projection sur un vecteur de mouvement global non zéro, et

la correspondance des blocs avec vecteur zéro fournit une quantité élevée de bon ajustement, bon ajustement signifiant qu'au moins 70% des blocs possèdent des corrélations d'au moins 75% avec le vecteur de mouvement global.

14. Un appareil de production d'une carte profondeur, l'appareil étant configuré pour l'exécution de la méthode d'une quelconque des revendications 1 à 11.

15. Un appareil selon la revendication 14, l'appareil étant configuré pour l'exécution de la méthode d'une quelconque des revendications 12 à 13 pour la production d'une vidéo tridimensionnelle à partir d'une vidéo bidimensionnelle d'entrée.

Fig. 1

EP 2 525 324 B1

Fig. 2

Fig. 3A

Fig. 3B

Global Motion Vector →

gmv_power →

inn_prod →

Projection Calculation

→ Projection of Vectors

Fig. 4

EP 2 525 324 B1

Fig. 5

block matching SADs
in the neighborhood
**AND**
vector variances are high

61

YES → Foreground Region

NO

Background is dynamic

62

YES

the block vector projection test
over the global motion vector is positive
**OR**
almost all of the projection results of other blocks
in the frame is high

63

YES → Background Region

NO

Foreground Region

NO

Block matching with zero
vector gives a very good-fit
**OR**
the vector is zero-vector
**OR**
the vector is very small with
also a small SAD value

64

YES → Background Region

NO

Foreground Region

Fig. 6

Initial Region

FG = 0
BG = 1

71

Sum of binary depth
decisions on the block neighborhood
and itself on frame n < low threshold
**OR**
Sum of binary depth decisions on the block
neighborhood and itself on
frame n-1 < low threshold

YES → Foreground Region

NO

72

Sum of binary depth
decisions on the block neighborhood
and itself on frame n > high threshold
**OR**
Sum of binary depth decisions on the block
neighborhood and itself on
frame n-1 > high threshold

YES → Background Region

NO

Initial Region

Fig. 7

Fig. 8

Conversion Enable/Disable Decision

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 2007024614 A
- US 7161614 B
- US 6996267 B
- US 6377625 B
- US 20110007136 A

### Non-patent literature cited in the description

- **PING LI ; DIRK FARIN ; RENE KLEIN GUNNEWIEK ; ETER H. N. DE WITH.** On Creating Depth Maps from Monoscopic Video using Structure from Motion. *27th Symposium on Information Theory in the Benelux,* June 2006, 508-515
- Automatic Segmentation of Moving Objects for Video Object Plane Generation. **THOMAS MEIER et al.** IEEE TRANSACTIONS ON CIRCUITS AND SYSTEMS FOR VIDEO TECHNOLOGY. IEEE SERVICE CENTER, 01 September 1998, vol. 8